# EUROPEAN PATENT APPLICATION

(11) **EP 3 670 032 A1**
(43) Date of publication of application: **24.06.2020**
(21) Application number: 18382976.1
(22) Date of filing: 21.12.2018
(51) Int. Cl.: B22F 3/105, B33Y 10/00, B29C 45/16, B29D 28/00, B22F 3/11, B22F 3/26

(54) **PRODUCTION METHOD FOR PRODUCING THREE-DIMENSIONAL PARTS**

(71) Applicant: Aciturri Engineering S.L.U., 47151 Boecillo (Valladolid) (ES)
(72) Inventor: CIMADEVILLA GARCIA, David, 47151 BOECILLO (Valladolid) (ES)
(74) Representative: Herrero & Asociados, S.L.

(57) **Abstract**

The present invention relates to a production method for producing three-dimensional parts which allows expediting manufacturing times, maintaining the external geometric requirements of the final part that is produced, while at the same time allows significantly reducing costs with respect to parts manufactured entirely by 3D printing. Said method is based on the combination of an additive manufacturing process and a process of injecting a material in a mold, comprising at least the following steps: creating a latticework (10) by means of additive manufacturing; introducing the latticework (10) into a mold; creating a matrix (20) by means of injecting a solidifiable liquid material into the mold, such that the matrix (20) surrounds the latticework (10) with said latticework (10) being embedded in the matrix (20); solidifying the matrix (20); and removing the three-dimensional part (1), said part being made up of the assembly formed by the additively manufactured latticework (10) and the solidified matrix (20).

## Description

### Object of the Invention

The present invention belongs primarily to the sector of three-dimensional object printing techniques, and more specifically to 3D object manufacturing by addition.

The object of the present invention is a production method for producing three-dimensional parts based on the combination of two technologies: additive manufacturing and material injection, whereby manufacturing times are expedited, maintaining the external geometric requirements of the final part that is produced, while at the same time it allows significantly reducing manufacturing costs with respect to parts manufactured entirely by 3D printing.

### Background of the Invention

Three-dimensional printing techniques (hereinafter, simply 3D printing), which allow manufacturing three-dimensional objects with high precision in terms of both their external geometry and their sizing, are widely known today. In that sense, the size of the 3D objects that are made may vary from small parts to large size components for architectural constructions, with complex and hard-to-produce geometric shapes.

More specifically, 3D printing is a manufacturing process whereby solid three-dimensional objects can be made from a digital model. In that sense, 3D printing uses an additive process in which layers of material in different forms are arranged successively. It must be indicated at this point that the 3D printing technique is different from additional machining techniques which are based on material removal by means of methods such as cutting or drilling (subtractive processes).

Several additive processes, which differ in the form in which the layers are deposited for creating the parts and in the materials that can be used, are known today. In some methods, for example, selective laser melting (SLM), direct metal laser sintering (DMLS), selective laser sintering (SLS), fused deposition molding (FDM), etc., the material is melted to make the different layers, while other solidifiable liquid materials are cured by means of using different sophisticated technologies, for example, stereolithography (SLA). Thin layers are cut for shaping them and attaching them to one another (for example, paper, polymer, metal) with laminated object manufacturing (LOM).

Three-dimensional printers (hereinafter, 3D printers) and rapid prototyping (RP) systems are used today to make prototype objects and parts from 3D computer aided design (CAD) tools. Most RP systems use a layer-by-layer additive method to form the different portions of a part by putting together liquid, powder, or sheet materials to form physical objects. In that sense, the machining phases can be reduced or eliminated by using said techniques, thereby making the 3D objects that are produced functionally equivalent to those parts of standard manufacture, depending on the materials used in making same.

However, it has been found that current 3D printing processes continue to have a number of problems and defects that can be optimized, specifically:
- they require long manufacturing times where, in many cases, the time per part produced is unacceptable for the manufacturer, with all this resulting in an overall low process performance;
- they involve considerable economic costs, mainly due to the high cost of the material used during the manufacturing process;
- the parts produced by means of current 3D printing processes are uniform or homogeneous in terms of the structural rigidity of the part, i.e., they do not allow producing points or areas of the part with a different degree of rigidity;
- they are limited to a small range of basic parts and components, not allowing the production of articulated parts, i.e., parts having axes of articulation, for example, by way of hinges.
- the current processes are only applicable for producing 3D objects from a specific material, constituting an unwanted limitation and not being suitable for working with other types of materials.

### Description of the Invention

By means of the present invention, the aforementioned drawbacks are solved by providing a production method for producing three-dimensional parts which allows expediting manufacturing times, maintaining the external geometric requirements of the final part that is produced, while at the same time allows significantly reducing manufacturing costs with respect to parts manufactured entirely by 3D printing.

The method herein described is based fundamentally on the combination of two technologies (additive manufacturing and material injection) which, when combined and associated, allow obtaining a range of advantages and particular properties in the parts that are finally produced, as will be explained below. More specifically, the production method of the invention is carried out by means of the combination of an additive manufacturing process and a process of injecting a material in a mold, wherein said production method comprises at least the following steps:
a) creating a latticework by means of additive manufacturing;
b) introducing the latticework into a mold, said mold being suitable for defining the outer shape of the final three-dimensional part to be produced;
c) creating a matrix by means of injecting a material into the mold, such that the matrix surrounds the latticework with said latticework being embedded in the matrix, and wherein the injected material is a solidifiable liquid material;
d) solidifying the matrix; and
e) removing the three-dimensional part, said part being made up of the assembly formed by the additively manufactured latticework and the solidified matrix.

It must be indicated at this point that when term "latticework" is mentioned in the present specification, it refers to a grid, core, or mesh, formed as a bar structure responsible for providing structural strength to the part. More particularly, the latticework is manufactured in a composite material which makes it possible to produce an ordered fiber with a controlled geometry, where the fiber is made up of the additively manufactured latticework itself, with said latticework having autonomous self-cohesion. At this point, it must be emphasized and specified that, unlike the present invention, current meshes have no structural consistency themselves.

Preferably, the latticework is made from a material suitable for three-dimensional printing, such as plastic, aluminum, titanium, ceramic, or the like. The wide range of possibilities offered by this method is thereby clearly shown as it has no restrictions in terms of the material to be used, rather it will depend on each specific application or the final purpose of the part to be produced.

With respect to the matrix, its main functions are to provide surface continuity, specifically providing continuity to the particular shape of each part to be produced, providing stability against buckling movement, and allowing the part to be thermally, refractorily, or chemically protected against the action of external agents, as well as possible impacts.

Preferably, the matrix is made from a solidifiable liquid material, such as epoxy resin, silicone, gum, rubber, ceramic, or the like. Again, there are no restrictions or limitations in terms of the material to be used for the matrix, provided that it is a solidifiable liquid material, as mentioned above.

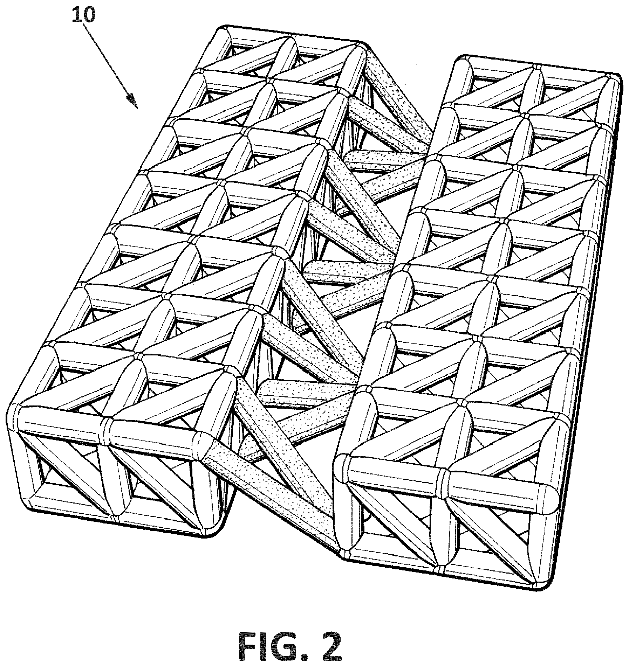

According to a preferred embodiment of the invention, it has been envisaged that the latticework created in step a) may have at least one section with a smaller moment of inertia. This particularity is not a trivial or random feature, but rather allows generating axes of articulation in the three-dimensional part that is finally produced. A smaller moment of inertia in a specific section can be implemented, among other solutions, with a latticework geometry like the one depicted in Figure 2.

With respect to step c) of creating the matrix, the possibility of being able to create it by means of a process similar to the resin transfer molding RTM process, or by means of a process similar to the resin transfer injection RTI process, has been contemplated.

In relation to step d) of solidifying the matrix, it has been envisaged that said step can be performed by means of a polymerization, cooling, or pyrolysis process.

The main advantages achieved by means of the method described in the present application are listed below:
- It allows expediting the times of the manufacturing process, maintaining the external geometric requirements of the final part that is produced.
- It allows significantly reducing manufacturing costs with respect to parts manufactured entirely by 3D printing, as a result of replacing a large part of the mass of the (high cost) 3D printing material with more cost-effective materials, such as resins, plastics, silicones, or the like, that can be injected in liquid state and then solidified by a polymerization, cooling, or pyrolysis process.
- It allows establishing in the part that is produced directions and locations with different degrees of rigidity by means of a specific design of the latticework embedded in the matrix.
- The preceding point allows creating parts with axes of articulation by means of creating sections with a very small moment of inertia that reproduce the behavior of a mechanism, such as that of a hinge.
- It allows producing parts with a thermal and/or chemical barrier for complete protection against adverse environmental conditions, such as temperature or chemical aggressions, as will be explained below.

### Description of the Drawings

To complement the description that is being made and for the purpose of helping to better understand the features of the invention according to a preferred practical embodiment thereof, a set of drawings is attached as an integral part of said description in which the following has been depicted in an illustrative and non-limiting manner:
Figure 1 shows a perspective view of a three-dimensional part according to a possible embodiment of the invention, once the latticework is created and before proceeding with material injection.
Figure 2 shows a view of a detail of a latticework, specifically an articulable latticework.
Figure 3 shows a view of the part of Figure 1, once having proceeded with the step of creating and injecting a silicone matrix which surrounds the latticework.
Figure 4 shows a perspective view of the final part that is produced, in this case with the functions of a hinge, specifically a leaf hinge.

### Preferred Embodiment of the Invention

Several preferred embodiments are described below in reference to the aforementioned drawings, without it limiting or reducing the scope of protection of the present invention.

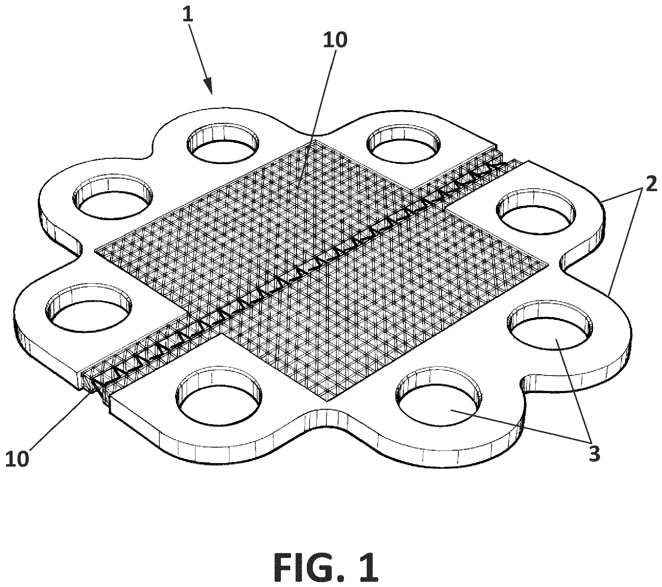

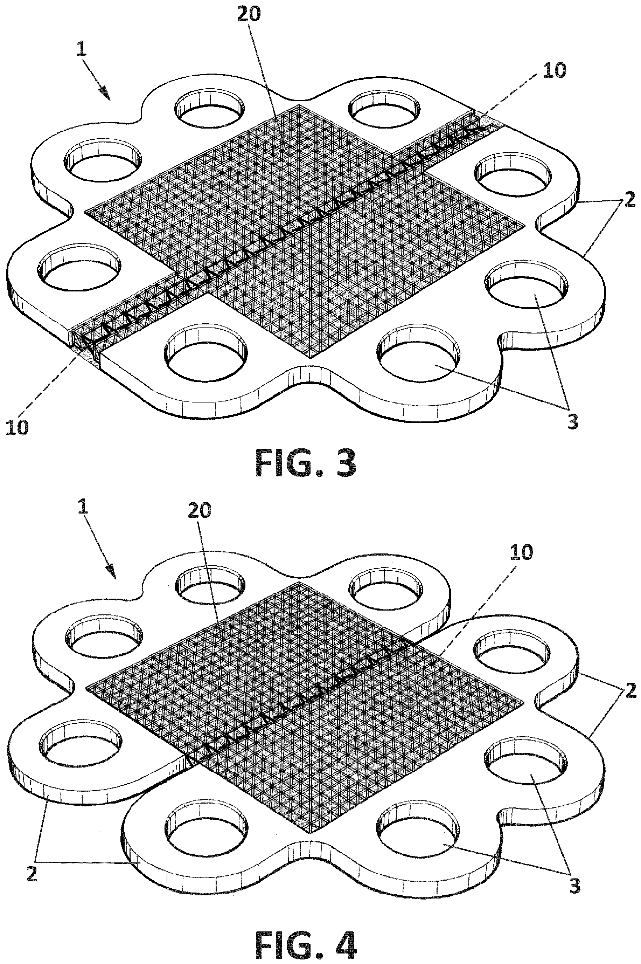

An example of three-dimensional part (1) produced by means of the method of the present invention can be seen in Figure 1, in which a latticework (10) which is created to provide structural strength to the part and has autonomous self-cohesion can be seen in the central area thereof. For the sake of clarity, the matrix (20), responsible for providing surface continuity to the part, has only been depicted in Figures 3 and 4, where it is a silicone matrix (20) in this example.

More specifically, Figure 2 shows an articulable latticework (10) formed from the combination of ministructures (depicted intermediate segment) with larger size structures (side segments), the ministructures being structures having the smallest size possible according to the 3D printing technique. An axis of articulation is thereby created from a section with a smaller moment of inertia, which reproduces the behavior of a mechanism, such as that of a leaf hinge, as shown in Figure 4.

In that sense, the preferred embodiment of Figures 1, 3, and 4 shows a three-dimensional part (1) by way of a leaf hinge, formed by a plate of a ministructure with the shape of a panel, having lugs (2) provided with holes (3) for the fixing thereof by screwing means, where the latticework (10) of Figure 2 has been combined with a continuous portion to enable attaching it to two structures or parts, one on each side of the hinge, by means of screws.

Therefore, by means of the combination of additive manufacturing technology for the latticework (10) and material injection technology for the matrix (20), three-dimensional parts (1) having characteristics and properties specific to each application are thereby produced, all this in a shorter manufacturing time and involving lower economic costs derived mainly from using less 3D printing material with respect to current techniques which use only additive manufacturing, and where said 3D printing material for the parts today furthermore does not allow making any contribution whatsoever from the structural viewpoint.

According to a second preferred embodiment not depicted in the drawings, the three-dimensional part (1) is formed by the combination of an aluminum latticework (10) and a molded matrix (20) in any material. Parts with a thermal and/or chemical barrier for complete protection against adverse environmental conditions, such as temperature or chemical aggressions, without having to withstand mechanical loads of the part in question, such as the components of a combustion engine, are thereby produced.

According to a third non-depicted embodiment, the three-dimensional part (1) is produced from a titanium latticework (10) and a ceramic matrix (20). This particular embodiment allows producing parts with high thermal protection, while at the same time reducing the weight with respect to a solution completely made of titanium. In that sense, this embodiment is particularly applicable, for example, in the production of parts of a combustion engine such as: the engine block, the cylinder head, the pistons, or the oil pan, allowing the production of parts with extreme performances in terms of temperature, while at the same time reducing their weight with respect to the equivalent parts thereof produced by means of current techniques.

Furthermore, according to a fourth preferred embodiment, it has been envisaged that during step a) of creating the latticework, and before step b) of introducing the latticework into the mold, microactuators, preferably piezoelectric actuators, are installed together with their corresponding electrical wiring inside the latticework. This embodiment allows producing parts the geometry of which can be modified with a simple electrical intervention on the piezoelectric actuators.

## Claims

1. Production method for producing three-dimensional parts (1) by means of the combination of an additive manufacturing process and a process of injecting a material in a mold, wherein said production method comprises at least the following steps:
a) creating a latticework (10) by means of additive manufacturing;
b) introducing the latticework (10) into a mold, said mold being suitable for defining the outer shape of the final three-dimensional part (1) to be produced;
c) creating a matrix (20) by means of injecting a material into the mold, such that the matrix (20) surrounds the latticework (10) with said latticework (10) being embedded in the matrix (20), and wherein the injected material is a solidifiable liquid material;
d) solidifying the matrix (20); and
e) removing the three-dimensional part (1), said part being made up of the assembly formed by the additively manufactured latticework (10) and the solidified matrix (20).

2. Production method according to claim 1, **characterized in that** the latticework (10) is made from a material suitable for three-dimensional printing, such as plastic, aluminum, titanium, ceramic, or the like.

3. Production method according to claim 1, **characterized in that** the matrix (20) is made from a solidifiable liquid material, such as epoxy resin, silicone, gum, rubber, ceramic, or the like.

4. Production method according to claim 1, **characterized in that** the latticework (10) created in step a) has at least one section with a smaller moment of inertia for generating axes of articulation in the three-dimensional part (1) that is finally produced.

5. Production method according to claim 1, **characterized in that** step c) is performed by means of a process similar to the resin transfer molding RTM process.

6. Production method according to claim 1, **characterized in that** step c) is performed by means of a process similar to the resin transfer injection RTI process.

7. Production method according to claim 1, **characterized in that** step d) is performed by means of a polymerization, cooling, or pyrolysis process.

8. Production method according to claim 1, **characterized in that** the three-dimensional part (1) is formed by a titanium latticework (10) and a ceramic matrix (20).

9. Production method according to claim 1, **characterized in that** the latticework (10) is formed from the combination of ministructures and larger size structures, the ministructures being structures having the smallest size possible according to the 3D printing technique.

10. Production method according to claim 9, **characterized in that** the microstructures have lugs (2) provided with holes (3) for the fixing thereof by screwing means.

11. Production method according to claim 1, **characterized in that** during step a) and before step b), microactuators are installed together with their corresponding electrical wiring inside the latticework (10).

12. Production method according to claim 11, **characterized in that** the microactuators are piezoelectric actuators.
